# EUROPEAN PATENT APPLICATION

(11) **EP 4 289 283 A1**
(43) Date of publication of application: **13.12.2023**
(21) Application number: 23178534.6
(22) Date of filing: 09.06.2023
(51) Int. Cl.: A23K 10/30, A23K 50/10

(54) **PROCESS FOR CUTTING A FORAGE FOR ANIMAL FEED**

(30) Priority: 09.06.2022 IT 202200012275
(71) Applicant: Faresin Industries S.p.A., 36042 Breganze VI (IT); Università degli Studi di Padova, 35122 Padova (IT)
(72) Inventor: FARESIN, Sante, 36042 Breganze (VI) (IT); FARESIN, Silvia, 36042 Breganze (VI) (IT); FARESIN, Giulia, 36042 Breganze (VI) (IT); ANDRIGHETTO, Igino, 36100 Vicenza (VI) (IT); SERVA, Lorenzo, 35030 Rubano (PD) (IT); BISON, Giacomo, 35010 Limena (PD) (IT); MAGRIN, Luisa, 35010 Villa del Conte (PD) (IT); MARCHESINI, Giorgio, 36100 Vicenza (VI) (IT); ZAGO, Mattia, 35124 Padova (PD) (IT)
(74) Representative: Gallo, Luca

(57) **Abstract**

Process for cutting a forage for farm animals, which comprises a step of arranging at least one dose of forage and a step of determining a time period (P1) indicative of the period of the year in which the dose of forage is collected.

In addition, the process comprises a first step of comparing the time period (P1) with a first collection time interval (I1), with a first cutting length (L1) associated therewith, and a second collection time interval (I2), with a second cutting length (L2) associated therewith. In addition, in the first comparing step with the time period (P1) in the first collection time interval (I1), the first cutting length (L1) is selected; and with the time period (P1) in the second collection time interval (I2), the second cutting length (L2) is selected. The process also comprises a first step of setting an objective cutting length (Lf), determined as a function of at least one between the selected first cutting length (L1) and second cutting length (L2), in a cutting apparatus, and a first cutting step, in which the cutting apparatus is actuated with the dose of forage at its interior in order to obtain a dose of cut forage.

## Description

### Field of application

The present invention refers to a process for cutting a forage for animal feed according to the preamble of the independent claim.

The present process is inserted in the field of zootechny and is advantageously intended to be employed, for example by food suppliers, formula technicians or stable/stall/barn veterinarians, in intensive animal farms, such as cows, pigs, goats, sheep, buffaloes, etcetera.

In particular, the process for cutting a forage, object of the present invention, is particularly indicated for selecting the length at which the fibers of the forage are to be cut, in order to optimize the metabolic function of the animals to whom the latter is distributed.

In addition, the process for cutting a forage, object of the present invention, is advantageously intended to be used for reducing the length of the fibrous fraction of the forage in accordance with the predetermined cutting length and advantageously to control the effectiveness of the cutting operation.

### State of the art

Intensive (or industrial) animal farms are generally situated in stables/stalls normally provided with one or more corridors, along the sides of which the animal feeders are placed.

In the stables/stalls of intensive (or industrial) animal farms, the animals are generally fed with a food product (in the jargon of the field termed unifeed or TMR (Total Mixed Ratio)) constituted by a mixture of foods, such as forages (like corn, sorghum, etc.) and concentrated foods (such as soy grain, corn grain, etc.).

The feeding of the animals by means of the aforesaid mixture allows the simultaneous administration of all the nutritional elements that allows maximizing the production efficiency, reducing to the minimum the risk of onset of dysmetabolic diseases. For such purpose, there are many guidelines dictated by scientific research, which propose maximizing the production, decreasing waste and preserving the animal wellbeing, through the balanced supply of nutritional elements.

For example, in the specific case of the Italian zootechnical production field, the milk industry is characterized by a form of rationing of the cows that places particular attention on the ratio between forages and concentrates. In accordance with the production regulations of Parmigiano Reggiano and Grana Padano (The Parmigiano Reggiano Cheese Consortium. 2018. PARMIGIANO REGGIANO. European Union: Official Journal of the European Union; The Consorzio Tutela Grana Padano. 2019. GRANA PADANO. European Union: Official Journal of the European Union), the use of forages has a fixed minimum limit equal to 50% of the foods administrated in the diet.

Therefore, the use of forages in the diet, especially for those local production, has significant environmental value, has an economic and social impact (Martin N.P., Russelle M.P., Powell J.M., Sniffen C.J., Smith S.I., Tricarico J.M., Grant R.J. 2017. Invited review: Sustainable forage and grain crop production for the US dairy industry. Journal of Dairy Science. 100(12):9479-9494. doi:10.3168/jds.2017-13080; Tabacco E., Comino L., Borreani G. 2018. Production efficiency, costs and environmental impacts of conventional and dynamic forage systems for dairy farms in Italy. European Journal of Agronomy. 99(June):1-12. doi:10.1016/j.eja.2018.06.004; Zucali M., Bacenetti J., Tamburini A., Nonini L., Sandrucci A., Bava L. 2018. Environmental impact assessment of different cropping systems of home-grown feed for milk production. Journal of Cleaner Production. 172:3734-3746. doi:10.1016/j.jclepro.2017.07.048) and enhances the commercial quality of the products introduced on the market.

In addition, from a standpoint of animal wellbeing and health, the use of forages in the diet plays an essential role for controlling the dysmetabolic forms, like rumen acidosis (Morgante M., Stelletta C., Berzaghi P., Gianesella M., Andrighetto I. 2007. Subacute rumen acidosis in lactating cows: an investigation in intensive Italian dairy herds. 91:226-234) which, as a final consequence, has strong repercussions on the production capacity of the cows.

In particular, the role of fiber for preventing dysmetabolic diseases can be attributed to its capacity of facilitating the ruminant activity and consequently facilitating greater salivation (Beauchemin K.A., Eriksen L., Nørgaard P., Rode L.M. 2008. Short Communication: Salivary Secretion During Meals in Lactating Dairy Cattle. Journal of Dairy Science. 91(5):2077-2081. doi:10.3168/jds.2007-0726), with beneficial effects on the control of the production of the milk fat, of food ingestion, of the digestibility of the fiber, and with decrease of diarrhea, laminitis and other diseases.

On such matter, the physical efficiency factor is known in the field - "pef" (Mertens D.R. 1997. Creating a System for Meeting the Fiber Requirements of Dairy Cows. Journal of Dairy Science. 80(7):1463-1481. doi:10.3168/jds.S0022-0302(97)76075-2), which takes under consideration the mechanical action that the fiber carries out for the stimulation of the ruminant activity. In particular, in order to estimate the value of pef, it is known to use the Penn State Particle Separator (Kononoff P.J., Heinrichs A.J., Buckmaster D.R. 2003. Modification of the Penn State Forage and Total Mixed Ration Particle Separator and the Effects of Moisture Content on its Measurements. Journal of Dairy Science. 86(5):1858-1863. doi:10.3168/jds.S0022-0302(03)73773-4). The physical efficiency factor generally increases with the increase of the fiber length.

In the zootechny field, chemical analyses are also known that are based on the use of neutral and acidic detergents, proposed by Van Soest (Van Soest P.J. 1967. Development of a Comprehensive System of Feed Analyses and its Application to Forages. Journal of Animal Science. 26(1):119-128. doi:10.2527/j as 1967.261119x; Van Soest P.J., Robertson J.B., Lewis B.A. 1991. Methods for Dietary Fiber, Neutral Detergent Fiber, and Nonstarch Polysaccharides in Relation to Animal Nutrition. Journal of Dairy Science. 74(10):3583-3597. doi:10.3168/jds.S0022-0302(91)78551-2), which have revolutionized the nutrition principles of the ruminants, facilitating an improved definition of the fiber quality (aNDF: neutral detergent resistant fiber) and above all of the ratios between the different components (hemicellulose, cellulose, and lignin).

The lignin and the ratio aNDF/lignin are normally indicated as estimators of the indigestible fiber fraction (Besle J.-M., Cornu A, Jouany J.-P. 1994. Roles of structural phenylpropanoids in forage cell wall digestion. Journal of the Science of Food and Agriculture. 64(2):171-190. doi:10.1002/jsfa.2740640206; Jung H.G., Allen M.S. 1995. Characteristics of plant cell walls affecting intake and digestibility of forages by ruminants. Journal of Animal Science. 73(9):2774-2790. doi:10.2527/1995.7392774x; Gallo A., Fustini M., Canestrari G., Formigoni A. 2016. Estimation of the indigestible fiber in different forage types Estimation of the indigestible fiber in different forage types. Journal of Animal Science. 94(1):1-7. doi:https://doi.org/10.2527/jas.2015-9649). Commonly, the indigestible fiber fraction is also measured as the fiber amount (aNDF) not degraded after 240 hours of in vitro incubation (Tilley J.M.A., Terry R.A. 1963. A two-stage technique for the in vitro digestion of forage crops. Grass and Forage Science. 18(2):104-111. doi:10.1111/j.1365-2494.1963.tb00335.x; Allen M.S., Mertens D.R. 1988. Evaluating Constraints on Fiber Digestion by Rumen Microbes. Journal of Nutrition. 118(2):261-270. doi:10.1093/jn/118.2.261; Van Soest PJ. 1994. Nutritional Ecology of the Ruminant. 2nd ed. Cornell University Press, editor. Ithaca; Raffrenato E., Ross D.A., Van Amburgh M.E. 2018. Development of an in vitro method to determine rumen undigested aNDFom for use in feed evaluation. Journal of Dairy Science. 101(11):9888-9900. doi:10.3168/jds.2018-15101). Generally, the digestibility of the fiber increases with the decrease of its length.

Therefore, if on one hand ensuring a minimum value of length and quantity of the fiber in the food is essential in controlling the dysmetabolic diseases, on the other hand an excessive value reduces the ingestion (and digestion) capacity thereof due to the greater physical bulk of the food (Mertens D.R. 1987. Predicting Intake and Digestibility Using Mathematical Models of Ruminal Function. Journal of Animal Science. 64(5):1548-1558. doi:10.2527/jas1987.6451548x; Dado R. G., S. A.M. 1995. Intake Limitations, Feeding Behavior, and Rumen Function of Cows Challenged with Rumen Fill from Dietary Fiber or Inert Bulk. Journal of Dairy Science. 78(29):118-133. doi:10.3168/jds.S0022-0302(95)76622-X).

Hence, known in the field is a process for cutting in order to obtain a forage cut to a desired length.

In particular, such process first of all provides for a loading step in which the forage is loaded into a cutting apparatus, for example a mixer wagon provided with mixing screws in turn comprising blades for cutting the forage. Subsequently, the process provides for a step of mixing and cutting, in which the screws of the mixer wagon are rotated in order to mix the forage and simultaneously reduce the dimensions of the fiber.

In order to increase the digestibility of the fiber, the commonly employed process provides for the previous reduction of the length of the fiber. Therefore, the step of mixing and cutting is generally prolonged for a time comprised between 10 and 60 minutes in order to obtain cut forage of reduced length.

In addition, during such step of mixing and cutting, portions of forage are sampled and tested in order to evaluate the value of pef and check that the fiber is also provided with a length suitable for ensuring a sufficient stimulation of the ruminant activity.

The above-described process of known type has in practice shown that it does not lack drawbacks.

The main drawback of such process lies in the fact that it is not adaptable to the type and quality of the forage. Indeed, taking under consideration in practice only the value of pef, the selection of the length of the forage is only oriented to ensure sufficient physical and mechanical characteristics, but not those from the digestibility standpoint.

A further drawback of the process of known type lies in the fact that the waste of energy used for cutting the forage is in most cases excessive and not necessary, since the digestibility of a forage is variable and not controllable by means of only pef analysis.

Indeed, from the results of a research (not published) carried out by the proponents of the present patent, it emerged that by reducing the length of the fiber, exploiting the mechanical cutting action of the mixer wagon in accordance with two different cutting times respectively equal to 10 minutes and to 60 minutes, the food ingestion increases (in terms of dry substance mass), without any significant variation of the milk production and consequently with a worsening of the food efficiency.

In addition, it emerged from the research that the cows fed with the forage processed for a greater time period (hence with smaller length) dedicate less time to eating, have a greater ingestion speed and have a lower mastication per ingested dry substance mass.

A further process is also known, in particular for the preparation and preservation of a forage, described in the patent WO 2005/041681, which provides for a step of collecting the forage, a step of cutting the collected forage, a step of pelletization of the cut forage and storage of the pelletized forage. Between the cutting step and the pelletization step, the hydrolyzation of the forage fibers is provided in order to render them more digestible. In this case, the cutting length of the forage to be obtained is pre-established and has little importance, since the forage is recomposed into pellets of suitable dimensions.

In addition, known from the patent DE 102012207591 is a further process for the cutting of a forage, implemented in a harvester provided with a cutting head for collecting the forage from the ground and with further knives for grinding the forage into the desired size. Such process initially provides that the operator set an objective cutting length of the forage that he/she wishes to obtain.

In addition, the harvester comprises a sensor that detects the quantity of dry matter or the content of fiber of the collected forage, and a control unit that, on the basis of such information and on the objective cutting length set by the operator, determines the distance between the knives in order to obtain the objective cutting length set by the user.

Also the aforesaid processes of known type have the same above-described drawbacks.

### Presentation of the invention

The main object of the present invention is therefore that of overcoming the drawbacks manifested by the solutions of known type, by providing a process for cutting a forage for animal feed which allows obtaining a length of the forage that is optimal for animal needs.

Another object of the present invention is to provide a process for cutting a forage for animal feed, which allows being adapted to forages with different characteristics.

Another object of the present invention is to provide a process for cutting a forage for animal feed, which allow considering both digestibility of the forage and its capacity to stimulate ruminant activity.

Another object of the present invention is to provide a process for cutting a forage for animal feed, which allows decreasing the energy expenditure tied to the cutting of the forage.

Another object of the present invention is to provide a process for cutting a forage for animal feed, which allows being automated and controlling, in a feedback manner, the processed forage.

Another object of the present invention is to provide a process for cutting a forage for animal feed that is simple and inexpensive to implement.

### Brief description of the drawings

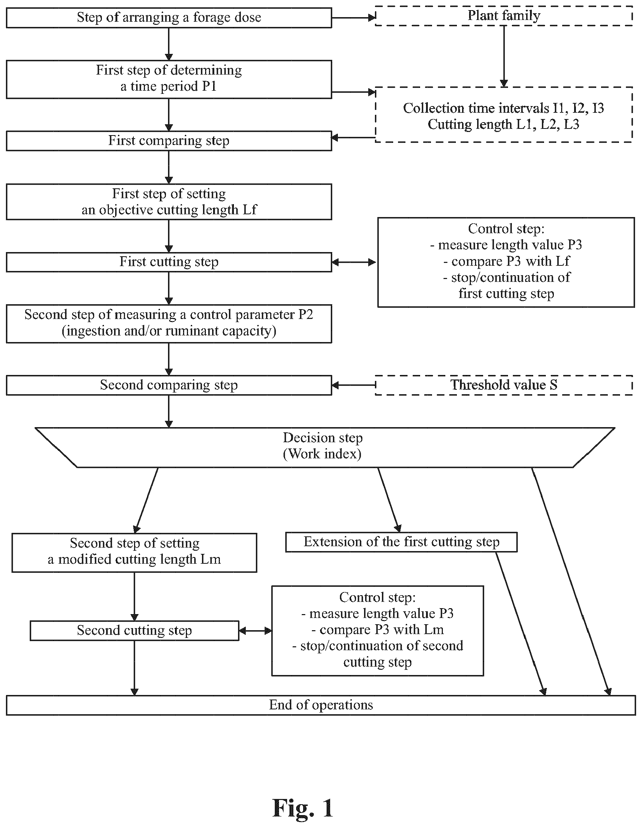

The technical characteristics of the invention, according to the aforesaid objects, are clearly seen in the contents of the below-reported claims and the advantages thereof will be more evident in the following detailed description, made with reference to figure 1 which represents a flow diagram relative to a merely exemplifying and non-limiting embodiment of the process for cutting a forage, object of the present invention.

### Detailed description of a preferred embodiment

The present process for cutting a forage for animal feed is intended to be advantageously employed in intensive animal farming in order to determine the optimal length at which a forage is to be cut that is present in a food product distributed to farm animals, such as meat or milk cows, pigs, goats, sheep, buffaloes, etcetera. In addition, the process for cutting a forage is intended to be advantageously employed for grinding the forage to the length suitable for optimizing the digestibility thereof and the stimulation of the ruminant activity. The food product intended to be distributed to animals (termed unifeed or Total Mixed Ratio (TMR) in the jargon of the field) usually comprises a mixture of solid bodies (in the form of ground plants and/or granules) of multiple foods. In particular, the mixture of the food product comprises forages (such as corn, sorghum, etc.) and concentrated foods which for example contain protein components (such as soy grain) and/or energy components (such as corn grain).

With the term "forage" it is therefore intended a food for livestock for production purposes and comprising a plant part of a plant intended, possible also after suitable transformations, to feed the aforesaid livestock. Advantageously, the forage can be, in a per se known manner, at the green state, dried or silage. The forage can therefore advantageously comprise green forages (not dried), in particular obtained from meadows, pastures or herbage, hays (dried naturally or artificially, or dehydrated), or silages (obtained via silage treatment of known type), in particular green or semi-dried silages.

The process for cutting a forage for animal feed, object of the present invention, comprises a step of arranging at least one dose of forage belonging to a plant family. In particular, the plant family is one between leguminous and gramineous.

Advantageously, the dose of forage can be arranged on its own or in mixture in the food product. In particular, the dose of forage can be arranged in silos, in one or more storage bales, in a collection conveyor, in a containment bed of a cutting and/or processing machine, e.g. a mill or a mixer wagon.

In particular, in addition, the dose of forage can be arranged in the green state, dried or silage.

Of course, without departing from the protective scope of the present invention, in the arrangement step, multiple doses of forage (equivalent or different) can be arranged. In such case, the process can be executed on each dose of forage or on a mixture of the doses of forage.

In particular, the plant family is associated with at least one predetermined first collection time interval I1, with at least one predetermined first cutting length L1 associated therewith. In addition, the plant family is associated with at least one predetermined second collection time interval I2, with at least one predetermined second cutting length L2 associated therewith.

Advantageously, the plant family is in addition associated with at least one predetermined third collection time interval I3, with at least one predetermined third cutting length L3 associated therewith.

With the expressions "first collection time interval", "second collection time interval" and "third collection time interval", time intervals will be intended, corresponding to the main periods of the year in which the forage is cut and collected/harvested. For example, the collection time intervals can correspond to respective periods of first cutting, second cutting and/or third cutting of the forage. More in detail, the first cutting corresponds with the collection/harvest of forage during the month of May or June. In particular, the forage collected in such period, termed "Maggengo" in the jargon, is known to be the best qualitatively.

In addition, the second cutting advantageously corresponds with the collection/harvest of forage during the month of August. In particular, the forage collected in such period is termed "Agostano" in the jargon.

In addition, the third cutting advantageously corresponds with the collection/harvest of forage during the month of September. In particular, the forage collected in such period, termed "Settembrino" or "third cutting", is that with inferior nutritional qualities.

Preferably, in the case of three collection time intervals I1, I2, I3, these are adapted to be associated with a respective first, second and third cutting length L1, L2, L3. Of course, without departing from the protective scope of the present invention, additional collection time intervals can also be provided for.

The collection time intervals and the cutting lengths will be described more in detail hereinbelow.

According to the invention, the process for cutting a forage also comprises a step of determining a time period P1 indicative of the period of the year in which said dose of forage is collected, i.e. in particular that which in the jargon is termed "cutting age".

More in detail, the time period P1 advantageously corresponds with a cutting age selected from among the first cutting, second cutting and third cutting.

Advantageously, the step of determining the time period P1 also provides for the determination of the mode of preservation of the forage dose. In particular, the mode of preservation of the forage dose corresponds with one from among conventional hay, hay in two periods, dehydrated forage and silage forage.

In accordance with the preferred embodiment of the invention, the step of determining the time period P1 and/or of the preservation mode provides for recording the relative data of the forage dose on a logic control unit of a farm machine set for cutting the forage or a computer.

Advantageously, the process also comprises a step of sampling the forage, preferably provided before the determination step, in which at least one plurality of forage doses is identified and/or picked up. In particular, the determination step is executed on each dose of forage of the plurality of forage doses. According to the invention, the process for cutting a forage also comprises a first step of comparing the time period P1 at least with the first collection time interval I1 and second collection time interval I2.

Advantageously, the first and second collection time interval I1, I2, and preferably also the third collection time interval I3, of the first comparing step does not depend on the plant family of the dose of forage. Otherwise, the first cutting length L1 and the second cutting length L2 depend on the plant family of the dose of forage.

Of course, without departing from the protective scope of the invention, the first collection time interval I1 and the second collection time interval I2 can also depend on the plant family of the dose of forage.

In the first comparing step, with the time period P1 in the first collection time interval I1, the first cutting length L1 is selected; and with the time period P1 in the second collection time interval I2, the second cutting length L2 is selected.

In accordance with a first embodiment variant of the invention, the plant family of the dose of forage is leguminous. In such case, the first cutting length L1 is at least lower than 30 mm and the second cutting length L2 is at least greater than 30 mm. In particular, in the case of three collection time intervals I1, I2, I3, the first cutting length L1 is lower than 30 mm, the second cutting length L2 is greater than 30 mm and the third cutting length L3 is equal to 30 mm.

In accordance with a second embodiment variant of the invention, the plant family of the dose of forage is gramineous. In such case the first cutting length L1 is at least lower than 35 mm and said second cutting length L2 is at least greater than 35 mm. In particular, in the case of three collection time intervals I1, I2, I3, the first cutting length L1 is lower than 35 mm, the second cutting length L2 is greater than 35 mm and the third cutting length L3 is equal to 35 mm.

In accordance with both the embodiment variants, the first collection time interval I1 is adapted to be associated with the first cutting length L1, the second collection time interval I2 is adapted to be associated with the second cutting length L2 and the third collection time interval I3 is adapted to be associated with the third cutting length L3 that are indicated above.

The collection time intervals I1, I2, I3 and the cutting lengths L1, L2, L3 of the embodiment variants are summarized in table 1.

According to the invention, the process also comprises a first step of setting an objective cutting length Lf in a cutting apparatus. In particular, the objective cutting length Lf is determined as a function of at least one between the first cutting length L1 and the second cutting length L2, and advantageously also the third cutting length L3, selected in the first comparing step.

**Table 1 - Embodiment variants**

| Plant family | Leguminous | | | Gramineous | | |
|---|---|---|---|---|---|---|
| | 1° interval | 2° interval | 3° interval | 1° interval | 2° interval | 3° interval |
| Collection time interval | First cutting | Second cutting | Third cutting | First cutting | Second cutting | Third cutting |
| Cutting length | < 30 mm | > 30 mm | = 30 mm | < 35 mm | > 35 mm | = 35 mm |

In this manner, the strategy in the selection of the correct cutting length of the fibrous fraction of the diet (forages) is advantageously carried out in a simple manner on the basis of the intrinsic characteristics of the forage closely tied to the period in which it was collected, in order to maximize the mechanical functionality with regard to the ingestion of the food, i.e. to its digestibility. More in detail, the objective cutting length Lf can be equal to one between at least the first and second cutting length L1, L2, and advantageously also the third cutting length L3, or it can be calculated based on the latter, in particular if there is multiple execution of the step of determining the time period P1 and the first comparing step, selecting different time periods P 1.

In accordance with a first embodiment of the process, the determination step provides for the calculation of only one time period P1. In such case, the first comparing step advantageously provides for comparing the time period P1 with one or more collection time intervals I1, I2, I3 in order to analyze in which one the time period P1 itself falls. In addition, the first comparing step advantageously provides for selecting only one cutting length L1, L2, L3, relative to the collection time interval I1, I2, I3 in which the time period P1 falls. In addition, in accordance with the first embodiment of the process, in the first setting step an objective cutting length value Lf is set, which is equal at least to the cutting length L1, L2, L3 selected in the first comparing step.

In accordance with a second embodiment of the process, a sampling step is provided as described above, in which a plurality of forage doses is identified and/or picked up. In addition, the step of determining the time period P1 and the first comparing step are advantageously executed on each dose of forage of the plurality of forage doses in order to obtain a corresponding plurality of selected cutting lengths L1, L2, L3. In such case, the first comparing step advantageously provides for comparing the time period P1 of the corresponding sample of forage with at least one collection time interval I1, I2, I3 in order to determine in which of these the relative time period P1 falls. In addition, the first comparing step advantageously provides for selecting the plurality of cutting lengths L1, L2, L3, each relative to the collection time interval I1, I2, I3 in which the corresponding time period P1 falls.

In addition, in accordance with the second embodiment of the process, the objective cutting length Lf is calculated as a statistical function of the plurality of selected cutting lengths L1, L2, L3. Advantageously, in the first setting step, an objective cutting length value Lf is set, which is equal to the cutting length value that appears more frequently in the plurality of cutting lengths L1, L2, L3.

Alternatively, in the first setting step, an objective cutting length value Lf is set, which is equal to the mean of the values of the plurality of cutting lengths L1, L2, L3. Of course, any other suitable statistical function can be used in order to evaluate the objective cutting length Lf.

Advantageously, the process also comprises a signaling step, in which the target cutting length Lf is communicated to an operator and/or to the cutting apparatus of the forage. For example, such process can be implemented in an automated system, in which the signaling step comprises the emission of an acoustic signal and/or a visual signal by the automated system itself in order to signal such target cutting length Lf to the operator. In addition, the signaling step can advantageously comprise the emission of a digital signal and/or an analog signal by the automated system itself in order to signal such target cutting length Lf to the cutting apparatus, which can automatically set it.

In particular, the cutting apparatus can for example be a forage-grinder mill or a mixer wagon, preferably provided with blades at variable distance from each other. Advantageously, in the first setting step the blades are set with a distance substantially equal to the selected target cutting length Lf.

The cutting process, object of the present invention, also provides for a first cutting step, in which the cutting apparatus is actuated with the dose of forage at its interior in order to obtain a dose of cut forage.

In this manner, the process allows controlling the cutting length of the forage based on the characteristics of ingestion and digestibility of the forage itself, even before its capacities for stimulating the ruminant activity. Therefore, it is possible to prevent excessively and inefficiently prolonging the first cutting step, saving energy and optimizing the properties of the forage.

Advantageously, the cutting process also comprises a step of measuring the dose of cut forage in order to determine a control parameter P2 indicative of the ingestion and/or ruminant capacity of an animal fed with the cut forage.

In particular, in the event in which control parameter P2 is indicative of the ruminant activity, is measured by means of a rumination meter, preferably comprising an accelerometer. More in detail, the accelerometer is adapted to detect the movement of the jaw of an animal in order to measure the ruminant activity thereof in terms of chewing speed.

Alternatively or in combination, in the event in which control parameter P2 is indicative of the ingestion activity, it is measured by means of a detection device, such as for example a NIR spectrometer. In particular, the control parameter P2 can be calculated with any predictive method and/or with the aid of specific equations resulting from the use of the NIR spectrometer and from the analysis of images acquired with such detection device.

More in detail, the NIR spectrometer operates in the near infrared spectrum and comprises, in a manner per se known to the man skilled in the art of the field, , at least one transmitter arranged for emitting at least one beam of radiations, in particular with spectral band 900-1700 nm, intended to hit the analyzed dose of cut forage (or a sample of cut forage), and an optical receiver arranged for detecting the spectrum of a reflected radiation beam coming from the dose of cut forage hit by the aforesaid radiation beam. The spectrometer also comprises an operational unit, preferably provided with an electronic processor, arranged for receiving the measurement of the spectrum of the reflected beam, detected by the optical receiver and for calculating the aforesaid control parameter P2.

Otherwise, in accordance with an alternative embodiment, the control parameter P2 in the measurement step is indicative of the quantity of physically effective fiber in the dose of cut forage.

In such case, the control parameter P2 in the measurement step is advantageously the physically effective fiber fraction (peNDF) of the dose of cut forage. In particular, the physically effective fiber fraction (peNDF) is calculated by means of the product between alpha-amylase-treated neutral detergent fiber fraction (aNDF) and physical efficiency factor (pef). Advantageously, the control parameter P2 can be equivalently substituted by only the physical efficiency factor (pef) or by the mean length of the fiber.

In particular, the alpha-amylase-treated neutral detergent fiber fraction (aNDF) can be calculated in particular with the Van Soest method (Van Soest P.J. 1967. Development of a Comprehensive System of Feed Analyses and its Application to Forages. Journal of Animal Science. 26(1):119-128. doi:10.2527/j as 1967.261119x; Van Soest P.J., Robertson J.B., Lewis B.A. 1991. Methods for Dietary Fiber, Neutral Detergent Fiber, and Nonstarch Polysaccharides in Relation to Animal Nutrition. Journal of Dairy Science. 74(10):3583-3597. doi:10.3168/jds.S0022-0302(91)78551-2).

Advantageously, in addition, in the measurement step the physical efficiency factor (pef) can be estimated by means of the calculation of the fiber fraction (dry substance) retained by meshes of a sieve with diameter of the holes of 1.18 mm. For example, in the second measurement step, a sieve can be used of type equivalent or similar to the Penn State Particle Separator (Kononoff P.J., Heinrichs A.J., Buckmaster D.R. 2003. Modification of the Penn State Forage and Total Mixed Ration Particle Separator and the Effects of Moisture Content on its Measurements. Journal of Dairy Science. 86(5):1858-1863. doi:10.3168/jds.S0022-0302(03)73773-4) and/or tabulated values of pef (Mertens D.R. 1997. Creating a System for Meeting the Fiber Requirements of Dairy Cows. Journal of Dairy Science. 80(7):1463-1481. doi:10.3168/jds.S0022-0302(97)76075-2).

Alternatively, the step of measuring the control parameter P2 indicative of the quantity of physically effective fiber, can be executed by means of a detection device arranged for directly detecting the physically effective fiber fraction (peNDF) of the dose of cut forage. Advantageously, the detection device comprises an NIR spectrometer operating in the near infrared spectrum, for example of the above-described type and suitably configured.

Advantageously, the cutting process also comprises a second step of comparing the control parameter P2 with at least one predetermined threshold value S, identifying a magnitude relation of the control parameter P2 with the at least one threshold value S.

In particular, the control parameter P2 can be greater, smaller or equal to the threshold value S. In the event in which the control parameter P2 is indicative of the ingestion capacity of an animal, the threshold value S is for example 20 kg/day of dry feed substance.

In addition, in the event in which the control parameter P2 is indicative of the ruminant capacity of an animal, the threshold value S is for example comprised between 7 and 8 hours/day.

Otherwise, in the event in which the control parameter P2 is the physically effective fiber fraction (peNDF) of the dose of cut forage, the threshold value S is for example a value comprised between 15 and 25%, preferably 21%. Advantageously, the process also comprises a decision step in which the dose of cut forage is associated with a work index corresponding to the magnitude relation identified in the second comparing step. In particular, the work index is indicative of an action to be completed in relation to the cut of the dose of forage. In particular, with the term "work index" it will be intended any type of indication or signal, associated with the magnitude relation identified between the control parameter P2 and the threshold value S, which brings decisional information regarding the actions to be completed on the dose of cut forage, such as for example the continuation of the first cutting step, the stoppage of the operations or the modification of the cutting length. Preferably, the actions to be completed in relation to the cut of the dose of forage are aimed to ensure that the control parameter P2 is greater than the threshold value S.

Advantageously, at least one action to be completed in relation to the cut of the dose of forage associated with the aforesaid work index corresponds with a modification of the objective cutting length Lf in order to obtain a modified cutting length Lm. In particular, the process advantageously comprises a second step of setting the modified cutting length Lm in the cutting apparatus.

For example, in the event in which the threshold value S is indicative of the ingestion capacity of an animal and the control parameter P2 is lower than such threshold value S, the objective cutting length Lf is advantageously reduced, setting a smaller modified cutting length Lm.

Alternatively, in the event in which the threshold value S is indicative of the ruminant capacity of an animal is the control parameter P2 is lower than such threshold value S, the objective cutting length Lf is increased, setting a greater modified cutting length Lm.

In addition, the process advantageously comprises a second cutting step, in which the cutting apparatus set with the modified cutting length Lm is actuated with the dose of cut forage at its interior.

In this manner, it is advantageously possible to also control that the length of the fiber be sufficiently long to ensure a satisfactory ruminant activity.

In accordance with the preferred embodiment, the cutting process also comprises a control step, preferably executed during the first cutting step and/or during the second cutting step, which provides for determining a length value P3 indicative of the length of the fiber of the dose of cut forage, in particular a mean length value of the fiber of the forage. For example, the length value P3 can be calculated by means of the use of a sieve, or by means of image analysis techniques, or by means of NIR spectroscopy.

In addition, the control step advantageously provides for comparing the length value P3 with the objective cutting length Lf and/or with the modified cutting length Lm that are set. In particular, the control step provides for stopping the first cutting step and/or the second cutting step when the length value P3 is substantially equal respectively to the objective cutting length Lf and/or to the modified cutting length Lm that are set.

In this manner, it is possible to control that the objectives with objective or modified cutting length Lf, Lm are reached.

The process, object of the invention, advantageously allows, on the basis of the qualitative and quantitative characteristics of several parameters characterizing the fiber, the optimal cutting selection of the forages, with a final control action on the size of the feed fiber or unifeed mixture. In accordance with such process, the desirable final value of pef is thus related to the type and quality of the fiber administered with the feed.

In addition, the process can be advantageously automated with feedback control on the cutting apparatus, for example on the mill set for cutting or on the mixer wagon.

Advantageously, the process, object of the invention, can be implemented by any automated system comprising one or more detection devices, configured for determining the control parameter P2 and/or the length value P3, and a logic control unit placed in data connection with such detection devices and configured with suitable modules for storing the time period P1 of the dose of forage and the data detected by the detection devices and executing at least the first comparing step and the first setting step and preferably also the second comparing step and the second setting step.

In particular, the time period P1 of the dose of forage is determined during the collection of the forage and can be inserted in the logic control unit together with the data of a feed recipe.

The automated system can for example be mounted on a load and feed system for mixer wagons or on a mixer wagon itself, or on a forage cutting mill. For example, at least one detection device can be mounted at the load arm or at the mixing tank of a mixer wagon. In addition, the logic control unit can be in data communication with suitable actuators connected to the screws of the mixer wagon in order to actuate them to rotate for a set time in order to obtain a specific objective cutting length Lf of the dose of forage.

The invention thus described therefore attains the pre-established objects.

## Claims

1. Process for cutting a forage for animal feed, **characterized in that** it comprises:
- a step of arranging at least one dose of forage belonging to a plant family; in which said plant family is associated with at least one predetermined first collection time interval (I1), with at least one predetermined first cutting length (L1) associated therewith, and at least one predetermined second collection time interval (I2), with at least one predetermined second cutting length (L2) associated therewith;
- a step of determining a time period (P1) indicative of the period of the year in which said dose of forage is collected;
- a first step of comparing said time period (P1) with said first collection time interval (I1) and second collection time interval (I2), in which:
- with said time period (P1) in said first collection time interval (I1), said first cutting length (L1) is selected; and
- with said time period (P1) in said second collection time interval (I2), said second cutting length (L2) is selected;
- a first step of setting an objective cutting length (Lf) in a cutting apparatus; said objective cutting length (Lf) being determined as a function of at least one between said first cutting length (L1) and said second cutting length (L2) selected in said first comparison step;
- a first cutting step, in which said cutting apparatus is actuated with said dose of forage at its interior in order to obtain a dose of cut forage.

2. Process according to claim 1, **characterized in that** said plant family is one between leguminous and gramineous.

3. Process according to claim 2, **characterized in that** said plant family is leguminous;
in which said first cutting length (L1) is at least lower than 30 mm and said second cutting length (L2) is at least greater than 30 mm.

4. Process according to claim 2, **characterized in that** said plant family is gramineous;
in which said first cutting length (L1) is at least lower than 35 mm and said second cutting length (L2) is at least greater than 35 mm.

5. Process according to any one of the preceding claims, **characterized in that** it comprises at least one sampling step, in which a plurality of forage doses is identified and/or picked up; in which said determination step and said first comparison step are executed on each dose of forage of said plurality of forage doses in order to obtain a corresponding plurality of selected cutting lengths (L1, L2);
and **in that** said objective cutting length (Lf) is calculated as a statistical function of said plurality of selected cutting lengths (L1, L2).

6. Process according to any one of the preceding claims, **characterized in that** it also comprises:
- a step of measuring said dose of cut forage in order to determine a control parameter (P2) indicative of the ingestion and/or ruminant capacity of an animal fed with said cut forage;
- a second step of comparing said control parameter (P2) with at least one predetermined threshold value (S), identifying a magnitude relation of said control parameter (P2) with said at least one threshold value (S);
- a decision step, in which said dose of cut forage is associated with a work index corresponding to the magnitude relation identified in said second comparison step;
in which said work index is indicative of an action to be completed in relation to the cutting of said dose of cut forage.

7. Process according to claim 7, **characterized in that** said control parameter (P2) is indicative of the ruminant activity and is measured by means of a rumination meter, preferably comprising an accelerometer.

8. Process according to claim 7, **characterized in that** said control parameter (P2) is indicative of the ingestion activity and is measured by means of an NIR spectrometer.

9. Process according to any one of claims 6 to 8, **characterized in that** said action to be completed associated with said work index corresponds with a modification of the objective cutting length in order to obtain a modified cutting length (Lm).

10. Process according to claim 9, **characterized in that** it also comprises:
- a second step of setting said modified cutting length (Lm) in said cutting apparatus;
- a second cutting step, in which said cutting apparatus set with said modified cutting length (Lm) is actuated with said dose of cut forage at its interior.
